# EUROPÄISCHE PATENTSCHRIFT

(11) **EP 3 194 183 B1**
(45) Veröffentlichungstag und Bekanntmachung des Hinweises auf die Patenterteilung: **07.08.2019**
(21) Anmeldenummer: 15729522.1
(22) Anmeldetag: 22.06.2015
(51) Int. Cl.: B60C 11/13

(54) **FAHRZEUGLUFTREIFEN**
PNEUMATIC VEHICLE TYRE
PNEUMATIQUE DE VÉHICULE

(30) Priorität: 19.09.2014 DE 102014218871
(43) Veröffentlichungstag der Anmeldung: 26.07.2017
(73) Patentinhaber: Continental Reifen Deutschland GmbH, 30165 Hannover (DE)
(72) Erfinder: RITTWEGER, Stefan, 30826 Garbsen (DE); BAPTISTA, Diogo, 30159 Hannover (DE); MAGALHAES RISCHBIETER, Ana Maria, 30826 Garbsen (DE); LORCHHEIM, Andrea, 30823 Garbsen (DE)
(74) Vertreter: Finger, Karsten
(86) Internationale Anmeldenummer: PCT/EP2015/063909
(87) Internationale Veröffentlichungsnummer: WO 2016/041648

(56) Entgegenhaltungen:
- DE-A1-102006 031 779
- DE-T2- 69 806 711
- JP-A- H0 717 216
- US-A1- 2013 153 105

## Beschreibung

Die Erfindung betrifft einen Fahrzeugluftreifen mit einem mit zumindest einer Umfangsnut, welche durch einen Nutgrund und zwei einander gegenüberliegende Nutflanken begrenzt ist und in welcher zumindest ein zweiteilig ausgeführten Schallbrecher aus zwei Vorsprüngen positioniert ist, dessen Vorsprünge unterschiedliche Volumen aufweisen, wobei die Vorsprünge des Schallbrechers voneinander in axialer Richtung getrennt und an den einander gegenüberliegenden Nutflanken anliegend ausgebildet sind, wobei der kleinere Vorsprung einer den größeren Vorsprung in radialer Richtung durchsetzenden und im Querschnitt parallel zur Laufstreifenoberfläche U-förmigen Aussparung gegenüberliegt, wobei bei Sicht in Längsrichtung durch die Umfangsnut der beim Nutgrund gemessene Abstand zwischen den Vorsprüngen des Schallbrechers 2,0 mm bis 3,0 mm beträgt.

Es ist bekannt, dass sich während des Fahrbetriebes in Umfangsnuten von Laufstreifen Schallwellen bilden, deren Frequenzen in einem für Menschen wahrnehmbaren Bereich liegen. Derartige Schallwellen breiten sich entlang der Umfangsnuten ungehindert aus, wodurch während des Fahrbetriebes unangenehm wahrnehmbare und störende Fahrgeräusche entstehen. Um dem entgegenzuwirken, können innerhalb von Umfangsnuten aus dem Gummimaterial des Laufstreifens mitgebildete zusätzliche Elemente ("Schallbrecher") angebracht werden, welche Schallwellen derart stören, dass die Fahrgeräusche reduziert werden. Solche Schallbrecher vermindern die Querschnittsfläche der Nut und können daher das Wasserableitvermögen der Nuten beeinträchtigen.

Ein Fahrzeugluftreifen der eingangs genannten Art ist beispielsweise aus der DE 698 06 711 T2 bekannt. Die an den Nutflanken als ausgebildeten Vorsprünge des Schallbrechers weisen eine konkave bzw. konvexe Form auf. Der größere Vorsprung ist dabei in radialer Richtung von einer parallel zur Laufstreifenoberfläche U-förmigen Aussparung durchsetzt. Bei Sicht in Längsrichtung durch die Umfangsnut beträgt der beim Nutgrund gemessene Abstand zwischen den Vorsprüngen des Schallbrechers 0,5 mm bis 2,0 mm.

Aus der US 2013/0153105 A1 ist ein Schwerlastreifen mit einem Umfangsnuten aufweisenden Laufstreifen bekannt. An der einen Nutflanke jeder Umfangsnut sind Vorsprünge ausgebildet, welche in Draufsicht in an der jeweils gegenüberliegenden Nutflanke ausgebildete Aussparungen geringfügig hineinragen. Dadurch sollen das Abrollgeräusch verringert und der Laufstreifenabrieb vergleichmäßigt werden.

Die JP H07 17216 A offenbart einen Fahrzeugluftreifen mit einem Laufstreifen, welcher in Querrillen ausgebildete Vorsprünge aufweist. Durch diese sollen ebenfalls das Abrollgeräusch verringert und der Laufstreifenabrieb vergleichmäßigt werden.

Ferner ist aus der EP 2 406 088 B1 ein Fahrzeugluftreifen bekannt, welcher einen Laufstreifen mit Umfangsnuten aufweist, auf deren Nutgrund mehrere in Umfangsrichtung verteilt angeordnete Schallbrecher in Form von radialen Erhebungen ausgebildet sind. Jede dieser Erhebungen setzt sich aus wenigstens zwei sich in Umfangsrichtung erstreckenden und in axialer Richtung aneinander angrenzenden Erhebungsabschnitten zusammen. Die Erhebungsabschnitte sind in Form von Abschnitten kreiszylindrischer Mantelflächen ausgebildet und derart angeordnet, dass sie über ihre gesamte Erstreckungslänge einen axialen Abstand zu den Nutflanken besitzen, sodass je ein freier Durchgangskanal zwischen den Erhebungen und der benachbarten Nutflanke vorhanden ist. Gemäß einer alternativen Variante ist einer der äußeren Erhebungsabschnitte über einen kurzen Steg an eine der Nutflanken angebunden. Fahrzeugluftreifen, deren Laufstreifen Umfangsnuten mit derart ausgeführten Erhebungen aufweisen, sollen eine reduzierte Geräuschbildung aufweisen und gute Aquaplaningeigenschaften besitzen. An den radial äußeren Oberflächen der bekannten Schallbrecher bilden sich bereits nach geringem Laufstreifenabrieb Plateauflächen aus, sodass es leicht zu Verwechslungen mit den Laufstreifenabrieb anzeigenden Indikatoren kommen kann, wenn diese in Umfangsnuten ausgebildete Erhebungen sind. Des Weiteren verursachen die schmalen Durchgangskanäle zwischen den Erhebungen und den benachbarten Nutflanken, insbesondere im Bereich der Nutflanken und des Nutgrundes, Spannungskonzentrationen, wodurch die Rissanfälligkeit stark erhöht ist. Infolge der Ausführung mit schmalen Erhebungen kann die Entlüftung des Laufstreifens beim Einformen des Rohreifens in die Vulkanisationsform in diesen Bereichen beeinträchtigt sein. Die Erhebungen werden nicht optimal ausgeformt, was das Auftreten von Rissen weiter begünstigt.

Der Erfindung liegt daher die Aufgabe zugrunde, einen Schallbrecher derart zu gestalten, dass keine Rissbildung auftritt, weiterhin ein gutes Wasserdrainagevermögen der Umfangsnut gewährleistet ist und keine Verwechslungsgefahr mit Abriebsindikatoren gegeben ist.

Gelöst wird die gestellte Aufgabe erfindungsgemäß dadurch, dass der größere Vorsprung etwa halb-kegelstumpfförmig ausgebildet ist und an seiner Nutflanke bis in eine vom Nutgrund in radialer Richtung ermittelte Höhe reicht, die vorzugsweise größer als die Höhe des kleineren Vorsprunges ist und maximal der Hälfte der Tiefe der Umfangsnut entspricht.

Die axiale Trennung der Schallbrecherteile innerhalb einer Umfangsnut sowie deren Anbindung an den einander gegenüberliegenden Nutflanken vermeidet das Bilden von Lufteinschlüssen in diesem Bereich beim Einformen des Rohreifens in die Vulkanisationsform. Durch die Anbindung an die Nutflanken entfallen ferner schmale Einschnitte zwischen den Schallbrecherteilen und den Nutflanken, wodurch im Fahrbetrieb die von den der Umfangsnut benachbarten Profilelementen eingeleiteten Spannungen gut verteilt werden können. Eine Konzentration der Spannungen wird somit vermieden und folglich bleibt eine gute Rissbeständigkeit im Bereich des Nutgrundes und der Nutflanken bei erfindungsgemäßen Schallbrechern erhalten. Durch die im Bereich des Schallbrechers verringerte Querschnittsfläche der Umfangsnut wird eine Ausbreitung etwaiger Schallwellen entlang der Umfangsnut effektiv unterdrückt. Der axiale Abstand zwischen den Schallbrecherteilen und die Aussparung im größeren Teil stellen außerdem ein gutes Wasserdrainagevermögen der Umfangsnut sicher. Die Ausführung des Schallbrechers aus zwei Teilen unterschiedlicher Volumen reduziert die Verwechslungsgefahr mit herkömmlichen Abriebsindikatoren.

Die kegelstumpfförmige Ausbildung gewährleistet zusätzlich zur Unterdrückung der Schallausbreitung ein weitgehend verwirbelungsfreies Strömen von Wasser durch die Nut. Die geringen Höhen der Schallbrecherteile sind insbesondere deshalb zu bevorzugen, da sich ein in die Laufstreifenoberfläche übergehendes Plateau erst bei stark fortgeschrittenem Laufstreifenabrieb ausbilden kann, sodass auch diese Massnahme eine Verwechslungsgefahr mit einem Abriebsindikator vermeiden hilft.

Bei einer bevorzugten Ausführung der Erfindung ist der kleinere Teil blockförmig ausgebildet und reicht an seiner Nutflanke bis in eine vom Nutgrund ausgehend in radialer Richtung ermittelte Höhe, die mindestens einem Drittel und maximal der Hälfte der Tiefe der Umfangsnut entspricht, was für ein gutes Wasserableitvermögen der Umfangsnut vorteilhaft ist.

Bei einer vorteilhaften Ausführungsform sind die Teile des Schallbrechers durch je eine Deckfläche begrenzt, welche mit der radialen Richtung je einen spitzen Winkel einschließt, welcher maximal 80° beträgt. Mit fortschreitendem Abrieb des Laufstreifens bilden sich daher Plateauflächen erst allmählich aus.

Vorzugsweise verlaufen die Deckflächen beider Teile unter einem Winkel von mindestens 60° zur radialen Richtung geneigt.

Bei einer weiteren bevorzugten Ausführungsform der Erfindung weisen der kleinere Vorsprung und die U-förmige Aussparung des größeren Vorsprungs in Umfangsrichtung im Wesentlichen gleiche Breiten von vorzugsweise 1,5 mm bis 2,5 mm auf. Der größere Vorsprung weist in Umfangsrichtung eine maximale Erstreckungslänge von 5,0 mm bis 7,0 mm auf.

Weitere Merkmale, Vorteile und Einzelheiten der Erfindung werden nun anhand der Zeichnung, in der eine Ausführungsform der Erfindung darstellt ist, näher beschrieben.

Dabei zeigen
Fig. 1 einen Ausschnitt einer Umfangsnut eines Laufstreifens eines Fahrzeugluftreifens, in Schrägansicht mit einer Ausführungsvariante eines Schallbrechers ("Noise-Breaker") gemäß der Erfindung,
Fig. 2 eine Draufsicht auf den Ausschnitt der Umfangsnut aus Fig. 1 und
Fig. 3 einen Schnitt entlang der Linie III-III der Fig. 2.

Erfindungsgemäß ausgeführte Schallbrecher sind vorzugsweise derart in Umfangsnuten von Laufstreifen verteilt, dass im Fahrbetrieb in jeder Umfangsnut sich jeweils ein Schallbrecher im Bereich der Bodenaufstandsfläche befindet. Dabei sind in einander benachbarten Umfangsnuten platzierte Schallbrecher in Umfangsrichtung gegeneinander versetzt angeordnet. Bei PKW- Reifen weisen die Schallbrecher in der jeweiligen Umfangsnut gegenseitige Abstände von zirka 10 cm auf.

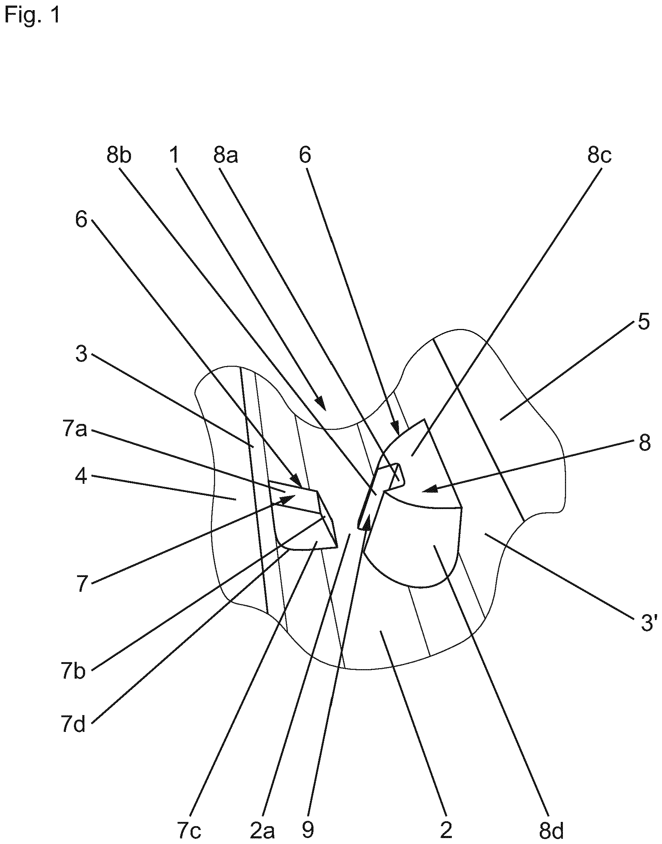

Bei dem in Fig. 1 gezeigten Ausschnitt sind eine in Umfangsrichtung umlaufende Umfangsnut 1, welche von einem Nutgrund 2 und zwei Nutflanken 3, 3' begrenzt ist, sowie seitlich der Umfangsnut 1 anschließende Profilpositive 4 und 5, welche beispielsweise Profilbänder oder Profilblöcke sind, und ein in der Umfangsnut 1 positionierter Schallbrecher 6 dargestellt. Die nicht dargestellten Bereiche des Laufstreifens können in bekannter Art und Weise gestaltet sein.

Der Schallbrecher 6 weist zwei Teile 7, 8 unterschiedlicher Volumen auf, wobei der kleinere Teil 7 in Form eines blockförmigen Vorsprunges und der größere Teil 8 im Wesentlichen in Form eines schräg abgeschnittenen halben Kegelstumpfes ausgebildet ist. Der blockförmige Teil 7 ist an der Nutflanke 3 und der kegelstumpfförmige Teil 8 an der Nutflanke 3' anliegend ausgebildet, sodass die Teile 7, 8 einander in axialer Richtung gegenüberliegen und durch einen Nutgrundabschnitt 2a in axialer Richtung voneinander getrennt sind.

Der blockförmige Teil 7 wird durch eine im Wesentlichen quadratische Deckfläche 7a, eine sich in Umfangsrichtung erstreckende, ebenfalls im Wesentlichen quadratische, zur radialen Richtung leicht geneigte Flankenfläche 7b sowie durch zwei quer zur Umfangsrichtung verlaufende Seitenflächen 7c, von denen in Fig. 1 nur eine zu sehen ist, begrenzt. Die beiden Seitenflächen 7c verlaufen im Wesentlichen parallel zueinander und besitzen im Wesentlichen jeweils die Form eines konvexen Vierecks, welches jedoch, bedingt durch die Rundung des Nutgrundes 2, ein abgerundetes Eck 7d aufweist.

Der kegelstumpfförmige Teil 8 weist eine dem blockförmigen Teil 7 gegenüberliegende Aussparung 9 auf, welche den kegelstumpfförmigen Teil 8 in radialer Richtung durchsetzt und im Querschnitt parallel zur Laufstreifenoberfläche betrachtet U-förmig ausgebildet ist. Der Boden der Aussparung 9 bildet im kegelstumpfförmige Teil 8 eine im Wesentlichen rechteckige Flankenfläche 8a, welche der quadratischen Flankenfläche 7b des blockförmigen Teils 7 gegenüberliegt. Die Aussparung 9 ist weiter von zwei im Wesentlichen parallelogrammförmigen Seitenflächen 8b begrenzt, welche analog zu den Seitenflächen 7c im Wesentlichen quer zur Umfangsrichtung verlaufen.

In radialer Richtung ist der kegelstumpfförmige Teil 8 durch eine halbkreisartig ausgeführte Deckfläche 8c begrenzt, welche durch die Aussparung 9 unterbrochen ist. In Umfangsrichtung ist der kegelstumpfförmige Teil 8 durch je ein Mantelflächensegment 8d begrenzt, welches zwischen der Nutflanke 3' und den parallelogrammförmigen Seitenflächen 8b verläuft. Die Mantelflächensegmente 8d verlaufen dabei unter einem Winkel von 1° bis 3° zur radialen Richtung geneigt.

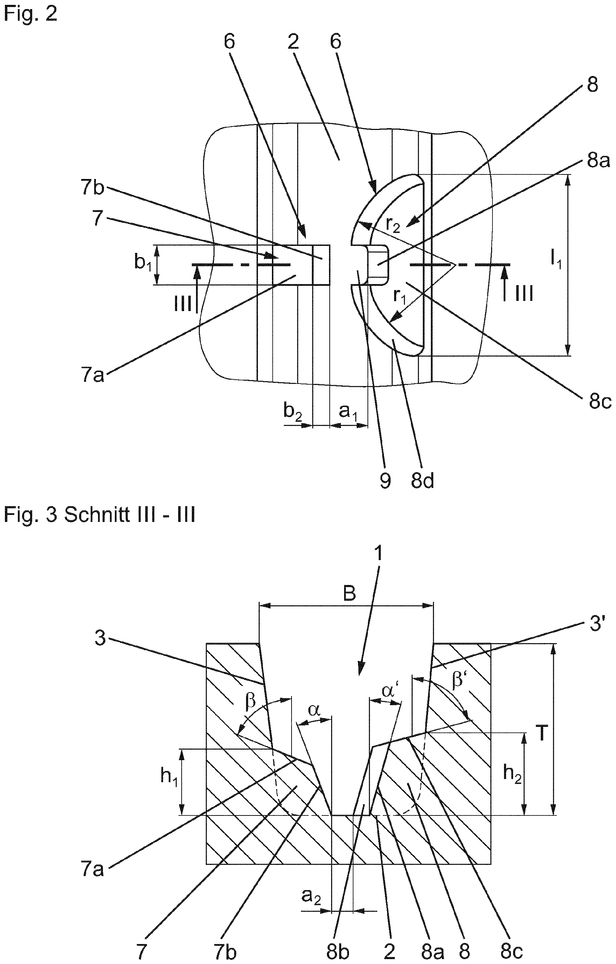

Fig. 2 zeigt eine Draufsicht auf die Umfangsnut 1 im Bereich des Schallbrechers 6. Der blockförmige Teil 7 weist einen in der Tiefe des Nutgrundes 2 und in radialer Richtung gemessenen Abstand a₁ von beispielsweise 1,5 mm bis 2,5 mm zur rechteckigen Flankenfläche 8a des kegelstumpfförmigen Teils 8 auf. In axialer und radialer Richtung besitzt die quadratische Deckfläche 7a des blockförmigen Teils 7 je eine Breite b₁ von beispielsweise 1,5 mm bis 2,5 mm. Die quadratische Flankenfläche 7b weist eine in axialer Richtung gemessene Breite b₂ von 0,2 mm bis zu 0,5 mm auf. Der der halbkreisartigen Deckfläche 8c des kegelstumpfförmigen Teils 8 zugrundeliegende Kreis weist einen Radius r₁ von 2,0 mm bis 3,0 mm auf. Am Nutgrund 2 besitzt der den Mantelflächen 8d zugrundeliegende Kreis einen Radius r₂, welcher größer als der Radius r₁ ist und 2,5 mm bis 3,5 mm beträgt. In Umfangsrichtung weist der kegelstumpfförmige Teil 8 eine maximale Erstreckungslänge l₁, welche dem Zweifachen des Radius r₂ und daher 5,0 mm bis 7,0 mm entspricht, auf. Die Aussparung 9 besitzt in Umfangsrichtung vorzugsweise ebenfalls die Breite b₁.

Fig. 3 zeigt die Schnittdarstellung entlang der Linie III-III der Fig. 2, wobei Teilstücke des Nutgrundes 2 und der Nutflanken 3, 3' gestrichelt dargestellt sind. Die Umfangsnut 1 weist an der Laufstreifenoberfläche eine Breite B von insbesondere 6,0 mm bis 10,0 mm auf, ihre Tiefe T an der tiefsten Stelle des Nutgrundes 2 beträgt insbesondere 6,0 mm bis 8,5 mm.

Der blockförmige Schallbrecherteil 7 reicht entlang der Nutflanke 3 bis in eine Höhe h₁, welche in radialer Richtung ausgehend vom Nutgrund 2 ermittelt wird und mindestens ein Drittel und maximal der Hälfte der Tiefe T entspricht. Die quadratische Flankenfläche 7b des blockartigen Schallbrecherteils 7 verläuft zur radialen Richtung unter einem Winkel α, welcher 14° bis 18° beträgt. Die quadratische Deckfläche 7a des Schallbrecherteils 7 weist einen Neigungswinkel β von maximal 80° und bevorzugter Weise von mindestens 60° zur radialen Richtung auf. Der kegelstumpfförmige Schallbrecherteil 8 erstreckt sich entlang der Nutflanke 3' bis in eine Höhe h₂, welche analog zur Höhe h₁ ermittelt wird, vorzugsweise größer als die Höhe h₁ ist und maximal der Hälfte der Tiefe T entspricht. Die rechteckige Flankenfläche 8a des kegelstumpfförmigen Schallbrecherteils 8 ist unter einem Winkel α', welcher vorzugsweise gleich groß wie der Winkel α ist, gegenüber der radialen Richtung geneigt. Die halbkreisähnliche Deckfläche 8c verläuft unter einem Winkel β', welcher ebenfalls maximal 80° und vorzugsweise mindestens 60° beträgt, zur radialen Richtung. Zwischen der quadratischen Flankenfläche 7b des blockförmigen Schallbrecherteils 7 besteht zu einer der parallelogrammartigen Seitenflächen 8b des Schallbrecherteils 8 ein in axialer Richtung gemessener Abstand a₂ von 2,0 mm bis 3,0 mm.

### Bezugsziffernliste

- 1 ........................: Umfangsnut
- 2 ........................: Nutgrund
- 2a ......................: Nutgrundabschnitt
- 3 ........................: Nutflanke
- 3' .......................: Nutflanke
- 4 ........................: Profilpositiv
- 5 ........................: Profilpositiv
- 6 ........................: Schallbrecher
- 7 ........................: blockförmiger Schallbrecherteil
- 7a ......................: quadratische Deckfläche
- 7b ......................: quadratische Flankenfläche
- 7c ......................: Seitenfläche
- 7d ......................: abgerundetes Eck
- 8 ........................: kegelstumpfförmiger Schallbrecherteil
- 8a ......................: rechteckige Flankenfläche
- 8b ......................: parallelogrammförmige Seitenfläche
- 8c ......................: halbkreisartige Deckfläche
- 8d ......................: Mantelflächensegment
- 9 ........................: Aussparung
- a_{1,2}.......................: axialer Abstand
- b_{1,2}.......................: Breite
- h_{1,2}.......................: Höhe
- l_{1,2}........................: Länge
- r_{1,2}......................: Radius
- α, α', β, β'.........: radialer Neigungswinkel

## Patentansprüche

1. Fahrzeugluftreifen mit einem Laufstreifen mit zumindest einer Umfangsnut (1), welche durch einen Nutgrund (2) und zwei einander gegenüberliegende Nutflanken (3,3') begrenzt ist und in welcher zumindest ein zweiteilig ausgeführten Schallbrecher (6) aus zwei Vorsprüngen (7,8) positioniert ist, dessen Vorsprünge (7, 8) unterschiedliche Volumen aufweisen, wobei die Vorsprünge (7, 8) des Schallbrechers (6) voneinander in axialer Richtung getrennt und an den einander gegenüberliegenden Nutflanken (3, 3') anliegend ausgebildet sind, wobei der kleinere Vorsprung (7) einer den größeren Vorsprung (8) in radialer Richtung durchsetzenden und im Querschnitt parallel zur Laufstreifenoberfläche U-förmigen Aussparung (9) gegenüberliegt, wobei bei Sicht in Längsrichtung durch die Umfangsnut (1) der beim Nutgrund (2) gemessene Abstand (a₂) zwischen den Vorsprüngen (7, 8) des Schallbrechers (6) 2,0 mm bis 3,0 mm beträgt, **dadurch gekennzeichnet,**
**dass** der größere Vorsprung (8) etwa halb-kegelstumpfförmig ausgebildet ist und an seiner Nutflanke (3') bis in eine vom Nutgrund (2) in radialer Richtung ermittelte Höhe (h₂) reicht, die vorzugsweise größer als die Höhe (h₁) des kleineren Vorsprunges (7) ist und maximal der Hälfte der Tiefe (T) der Umfangsnut (1) entspricht.

2. Fahrzeugluftreifen nach Anspruch 1, **dadurch gekennzeichnet, dass** der kleinere Vorsprung (7) blockförmig ausgebildet ist und an seiner Nutflanke (3) bis in eine vom Nutgrund (2) in radialer Richtung ermittelte Höhe (h₁) reicht, die mindestens einem Drittel und maximal der Hälfte der Tiefe (T) der Umfangsnut (1) entspricht.

3. Fahrzeugluftreifen nach Anspruch 1 oder 2, **dadurch gekennzeichnet, dass** die Vorsprünge (7, 8) des Schallbrechers (6) durch je eine Deckfläche (7a, 8c) begrenzt sind, welche mit der radialen Richtung je einen spitzen Winkel (β, β'), welcher maximal 80° beträgt, einschließt.

4. Fahrzeugluftreifen nach Anspruch 3, **dadurch gekennzeichnet, dass** die Deckflächen (7a, 8c) beider Vorsprünge (7, 8) unter einem Winkel (β, β') von mindestens 60° zur radialen Richtung geneigt verlaufen.

5. Fahrzeugluftreifen nach einem der Ansprüche 1 bis 4, **dadurch gekennzeichnet, dass** der kleinere Vorsprung (7) und die U-förmige Aussparung (9) des größeren Vorsprunges (8) in Umfangsrichtung im Wesentlichen gleich große Breiten (b₁) aufweisen.

6. Fahrzeugluftreifen nach Anspruch 5, **dadurch gekennzeichnet, dass** die Breite (b₁) 1,5 mm bis 2,5 mm beträgt.

7. Fahrzeugluftreifen nach einem der Ansprüche 1 bis 6, **dadurch gekennzeichnet, dass** der größere Vorsprung (8) eine in Umfangsrichtung ermittelte maximale Erstreckungslänge (l₁) von 5,0 mm bis 7,0 mm aufweist.

## Claims

1. Pneumatic vehicle tyre having a tread with at least one circumferential groove (1) which is delimited by a groove base (2) and two mutually opposite groove flanks (3, 3') and in which at least one sound absorber (6) that is embodied in two parts and is made up of two protrusions (7, 8) is positioned, the protrusions (7, 8) thereof having different volumes, wherein the protrusions (7, 8) of the sound absorber (6) are formed separately from one another in an axial direction and in a manner bearing against the mutually opposite groove flanks (3, 3'), wherein the smaller protrusion (7) is located opposite a cutout (9) that passes through the larger protrusion (8) in a radial direction and is cross-sectionally U-shaped parallel to the tread surface, wherein, as seen in a longitudinal direction through the circumferential groove (1), the distance (a₂), measured at the groove base (2), between the protrusions (7, 8) of the sound absorber (6) is 2.0 mm to 3.0 mm,
**characterized**
**in that** the larger protrusion (8) is formed approximately in the shape of half a truncated cone and reaches at its groove flank (3') to a height (h₂) determined in a radial direction from the groove base (2), said height (h₂) being preferably greater than the height (h₁) of the smaller protrusion (7) and corresponding at most to half the depth (T) of the circumferential groove (1).

2. Pneumatic vehicle tyre according to Claim 1,
**characterized in that** the smaller protrusion (7) is formed in the shape of a block and reaches at its groove flank (3) to a height (h₁) determined in a radial direction from the groove base (2), said height (h₁) corresponding to at least a third of and at most half the depth (T) of the circumferential groove (1).

3. Pneumatic vehicle tyre according to Claim 1 or 2,
**characterized in that** the protrusions (7, 8) of the sound absorber (6) are delimited by respective top surfaces (7a, 8c) which enclose with the radial direction respective acute angles (β, β') of at most 80°.

4. Pneumatic vehicle tyre according to Claim 3,
**characterized in that** the top surfaces (7a, 8c) of the two protrusions (7, 8) extend in a manner inclined at an angle (β, β') of at least 60° to the radial direction.

5. Pneumatic vehicle tyre according to one of Claims 1 to 4, **characterized in that** the smaller protrusion (7) and the U-shaped cutout (9) in the larger protrusion (8) have substantially identical widths (b₁) in the circumferential direction.

6. Pneumatic vehicle tyre according to Claim 5,
**characterized in that** the width (b₁) is 1.5 mm to 2.5 mm.

7. Pneumatic vehicle tyre according to one of Claims 1 to 6, **characterized in that** the larger protrusion (8) has a maximum extension length (l₁), determined in the circumferential direction, of 5.0 mm to 7.0 mm.

## Revendications

1. Pneumatique de véhicule comprenant une bande de roulement avec au moins une rainure périphérique (1) qui est limitée par un fond de rainure (2) et deux flancs de rainure (3, 3') opposés l'un à l'autre et dans laquelle est positionné au moins un dispositif d'atténuation du bruit (6) réalisé en deux parties, constitué de deux saillies (7, 8), dont les saillies (7, 8) présentent des volumes différents, les saillies (7, 8) du dispositif d'atténuation du bruit (6) étant séparées l'une de l'autre dans la direction axiale et étant réalisées de manière à s'appliquer contre les flancs de rainure (3, 3') mutuellement opposés, la plus petite saillie (7) étant opposée à un évidement (9) en forme de U traversant la plus grande saillie (8) dans la direction radiale et parallèle en section transversale à la surface de la bande de roulement, la distance (a₂) mesurée au niveau du fond de rainure (2) entre les saillies (7, 8) du dispositif d'atténuation du bruit (6), en vue dans la direction longitudinale à travers la rainure périphérique (1), étant de 2,0 mm à 3,0 mm, **caractérisé en ce que**
la plus grande saillie (8) est réalisée approximativement en forme de demi-tronc de cône et s'étend au niveau de son flanc de rainure (3') jusqu'à une hauteur (h₂) déterminée à partir du fond de rainure (2) dans la direction radiale, qui est de préférence supérieure à la hauteur (h₁) de la plus petite saillie (7) et qui correspond au maximum à la moitié de la profondeur (T) de la rainure périphérique (1).

2. Pneumatique de véhicule selon la revendication 1, **caractérisé en ce que** la plus petite saillie (7) est réalisée en forme de bloc et s'étend au niveau de son flanc de rainure (3) jusqu'à une hauteur (h₁) déterminée à partir du fond de rainure (2) dans la direction radiale, qui correspond au moins à un tiers et au maximum à la moitié de la profondeur (T) de la rainure périphérique (1).

3. Pneumatique de véhicule selon la revendication 1 ou 2, **caractérisé en ce que** les saillies (7, 8) du dispositif d'atténuation du bruit (6) sont limitées à chaque fois par une surface de recouvrement (7a, 8c) qui forme avec la direction radiale à chaque fois un angle aigu (β, β') qui vaut au maximum 80°.

4. Pneumatique de véhicule selon la revendication 3, **caractérisé en ce que** les surfaces de recouvrement (7a, 8c) des deux saillies (7, 8) s'étendent de manière inclinée suivant un angle (β, β') d'au moins 60° par rapport à la direction radiale.

5. Pneumatique de véhicule selon l'une quelconque des revendications 1 à 4, **caractérisé en ce que** la plus petite saillie (7) et l'évidement en forme de U (9) de la plus grande saillie (8) présentent, dans la direction périphérique, essentiellement des largeurs identiques (b₁)

6. Pneumatique de véhicule selon la revendication 5, **caractérisé en ce que** la largeur (b₁) est comprise entre 1,5 mm et 2,5 mm.

7. Pneumatique de véhicule selon l'une quelconque des revendications 1 à 6, **caractérisé en ce que** la plus grande saillie (8) présente une longueur d'étendue maximale (l₁) déterminée dans la direction périphérique comprise entre 5,0 mm et 7,0 mm.
